# EUROPEAN PATENT APPLICATION

(11) **EP 1 689 014 A1**
(43) Date of publication of application: **09.08.2006**
(21) Application number: 05002446.2
(22) Date of filing: 04.02.2005
(51) Int. Cl.: H01M 8/10

(54) **A method for preparing a membrane to be assembled in a membrane electrode assembly and membrane electrode assembly**

(71) Applicant: PAUL SCHERRER INSTITUT, 5232 Villigen PSI (CH)
(72) Inventor: Gürsel, Selmiye Alkan, Dr., CH-5200 Brugg (CH); Gubler, Lorenz, Dr., CH-8006 Zürich (CH); Scherer, Günther G., Dr., CH-5607 Hägglingen (CH)
(74) Representative: Fischer, Michael

(57) **Abstract**

A method for preparing a membrane to be assembled in a membrane electrode assembly is disclosed, comprising the steps of:
a) irradiating sections (4) of a polymer film (2) with electromagnetic and/or particle radiation with a predetermined irradiation profile in order to both define irradiated sections (4) and to form reactive centers, i.e. radicals, in said irradiated sections (4) of the membrane; thereby separating the irradiated sections (4) from each other by separation bands (6) of un-irradiated membrane sections;
b) exposing the film (2) comprising the irradiated sections (4) to a monomer or a mixture of monomers amenable to radical polymerization in order to achieve the formation of a graft copolymer in said irradiated sections (4).

This method and the respective assembly yield a membrane that has, due to the profile of the irradiation, separated regions of distinct and appropriate properties to serve as a fuel cell electrolyte. It is therefore possible to generate within the same membrane layer or membrane film sections which have in its swollen state proton-conductive properties adjacent to the separation band sections which are the remaining original insulating starting material. This allows to generate within a single layer a plurality of separate fuel cells. Furthermore, this method allows to achieve additional property gradients, such as conductivity, water uptake, etc., within the same "activated" section and also over the thickness of the membrane for the purpose of asymmetric grafting.

## Description

The invention relates to a method for preparing a membrane to be assembled in a membrane electrode assembly. Further, the invention relates to a membrane electrode assembly.

Polymer electrolyte fuel cells (PEFCs) are well known in the prior art. A single cell consists of a solid polymer membrane serving as electrolyte, sandwiched between two electrodes, the anode and cathode, respectively. This layered component is known as membrane electrode assembly (MEA). The MEA is usually assembled into a filter-press type cell housing, which provides electronic contact to the electrodes and comprises a means for reactant distribution and product removal. Typically, a plurality of individual fuel cells, separated by bipolar plates, are stacked to form a fuel cell stack in order to obtain the desired operating voltage by connecting the plurality of fuel cells in series.

In a PEFC, the polymer electrolyte or proton exchange membrane (PEM) serves both as suitable proton conductor as well as separator of anode and cathode compartment. During operation, hydrogen, a hydrogen containing gas mixture or methanol-water mixture is supplied to the anode, whereas oxygen or air is supplied to the cathode.

In the presence of a catalyst deposited at the membrane-electrode interface, such as platinum, the hydrogen molecules are split into protons and electrons on the anode side, while on the cathode side oxygen molecules react with protons and electrons to form water. Between anode and cathode, electrons are exchanged via an external circuitry, with an electric load being part of said circuitry, and protons via the proton exchange membrane.

Such a fuel cell is disclosed, for example, in the international patent application WO 2005/004265, which deals with a solution to a crucial problem during operating such type of fuel cell, namely the proper humidification of the polymer electrolyte membrane. Another important issue to be treated seriously is the proper design of the proton exchange membrane. One proposed method for fabricating proton exchange membranes is the process of radiation grafting, providing a component with suitable mechanical stability and simultaneously good proton conductivity and water transport properties. Those aspects have been treated in the yet not published international patent application PCT/EP2004/006362.

Despite these solutions it is still desirable to conceive materials and components for the PEFC which address some the remaining challenges, such as the sealing of individual cells and/or the corrosion of the bipolar plate material when it is in contact with the acidic proton exchange membrane. Furthermore, the use of the membrane as sealing component, which is a typical concept in the PEFC community, can lead to mechanical strain within the material due changes in the hydration state of the membrane.

It is therefore an object of the present invention to provide a method for preparing a membrane to be assembled in a membrane electrode assembly and a membrane electrode assembly which accounts for these problems in providing inventive solutions.

This aim is achieved with reference to the membrane electrode assembly according to the present invention by a membrane electrode assembly comprising a polymer electrolyte layer which is sandwiched between a cathode layer and an anode layer, wherein said polymer electrolyte layer is a non ion and non electron conducting, preformed polymer film modified locally by radiation grafting and sulfonation, thereby providing proton conductivity in the film area to be covered by the electrodes (active area), and untreated sections of the film in the region outside or within the active area. Hereby, it has to be emphasized that the term "untreated section" should be generally understood in a sense that the properties in the un-irradiated sections differ from the properties in the irradiated sections.

This aim is achieved with reference to the method according to the present invention by a method for preparing a membrane to be assembled in a membrane electrode assembly, comprising the steps of:
a) irradiating sections of the preformed polymer film with electromagnetic and/or particle radiation with a predetermined irradiation dose and profile in order to both define irradiated sections and to form reactive centers, i.e. radicals, in said irradiated sections of the film.
b) exposing the polymer film comprising irradiated sections to a monomer or a mixture of monomers amenable to radical polymerization in order to achieve the formation of a graft copolymer in said irradiated sections. Further steps, such as sulfonation of the grafted component, may be required to introduce the desired proton conduction functionality.

This method and this assembly yield a polymer film that has, due to the controlled local profile of the irradiation, regions of distinct and appropriate properties to serve as a fuel cell electrolyte. It is therefore possible to generate within the same polymer film a multitude of modified sections which have in their water swollen state proton-conductive properties, separated by sections of un-modified original insulating starting material.
This allows the incorporation of a plurality of separate fuel cells within a single polymer film. Furthermore, this method allows the realization of additional gradients of various film and membrane properties, such as conductivity, water uptake, etc., within the same "activated" section and also over the thickness of the membrane for the purpose of asymmetric grafting.

Therefore, in a preferred embodiment of the method, said predetermined irradiation profile may be chosen to provide a irradiation gradient increasing from the margins of the sections to be irradiated to the inner portions of the sections to be irradiated.

In order to balance the effects of film expansion upon modification of the irradiated sections leading to bulging / buckling of the polymer film in these areas, the predetermined irradiation profile may be grid-shaped. Additionally or alternatively, the thickness of the membrane in the sections to be irradiated may be reduced as compared to the thickness of the membrane in the areas that remain un-irradiated. Again, additionally or alternatively, the sections to be irradiated may be subject to an imprinting or embossing step in order to generate a three-dimensional membrane structure. One or more of these features allow the control of the expansion of the film. The expansion occurs in the irradiated sections upon grafting and subsequent sulfonation / swelling of the material. The expansion can be balanced by either reducing the membrane thickness in the irradiated (active or activated) sections, or leaving distinct, connected sections un-irradiated as support for the sections bearing the functional groups, or imprinting a three-dimensional structure within the activated section in order to balance the said expansion, with the additional advantage of an improved contact between the activated sections and the material to be attached to the activated sections.

Additionally, in a further preferred embodiment of the inventive method, the steps of irradiation and subsequent chemical modification by grafting and post-processing may be carried out repeatedly using different irradiation profiles and different chemical compounds or precursors thereof, respectively. This feature allows to "grow" the activated sections of the membrane in a desired manner.

In summarizing the advantages of the present invention, it has to be pointed out, that:
a) The un-modified areas of the original polymer film can be used directly as a separating and sealing material between different fuel cell sections. The mechanical properties of these original polymer sections are superior to those of the dehydrated modified areas, as known from the prior art.
b) Additional sealing material and/or covering material can be avoided for the contact area of the polymer film with the bipolar plates, because the bipolar plates are exclusively in contact with the un-modified film in the sealing regions at the edges of the fuel cell sections.
c) The absence of ion exchange functional groups in the unmodified areas which constitute the sealing regions possibly allows the use of metallic bipolar plates based on steel, because the corrosion problem is less pronounced.
d) The fuel cells can be placed adjacent to each other separated by un-modified areas within the same polymer film. This geometric arrangement allows to build fuel cell modules having alternative stack geometries, such as a cylindrical shape with the wound polymer film comprising the individual cells. This geometry allows generating higher voltages within the same plane and smaller required currents to achieve the same electrical power.
e) The use of the irradiation profile delivers superior flexibility and functionality regarding the used polymer components. It is possible to generate highly target-oriented gradients for the grafting components, for the mechanical structure and for the pattern.
f) The repeated application of the process of irradiation and subsequent grafting and post-processing facilitates the realization of a locally definable polymer film modification using different grafting components with each single pass of the process steps. For example, different regions, even within the same sections, can be improved for the exchange of cations, others can be improved for the exchange of anions.

Other advantageous features of the present invention can be taken from additional depending claims.

Examples of the present invention will be described below with reference to the appended drawings, which depict:
- Fig. 1: is a schematic view of a polymer film having a plurality of modified sections separated from each other;
- Fig. 2: is a schematic cross sectional view through an activated section of the polymer film, showing imprinted surface topography;
- Fig. 3: is a schematic cross secional view of a plurality of fuel cell sections within one single polymer film; and
- Fig.4: is a schematic view of a cylindrical fuel cell module with would polymer film.

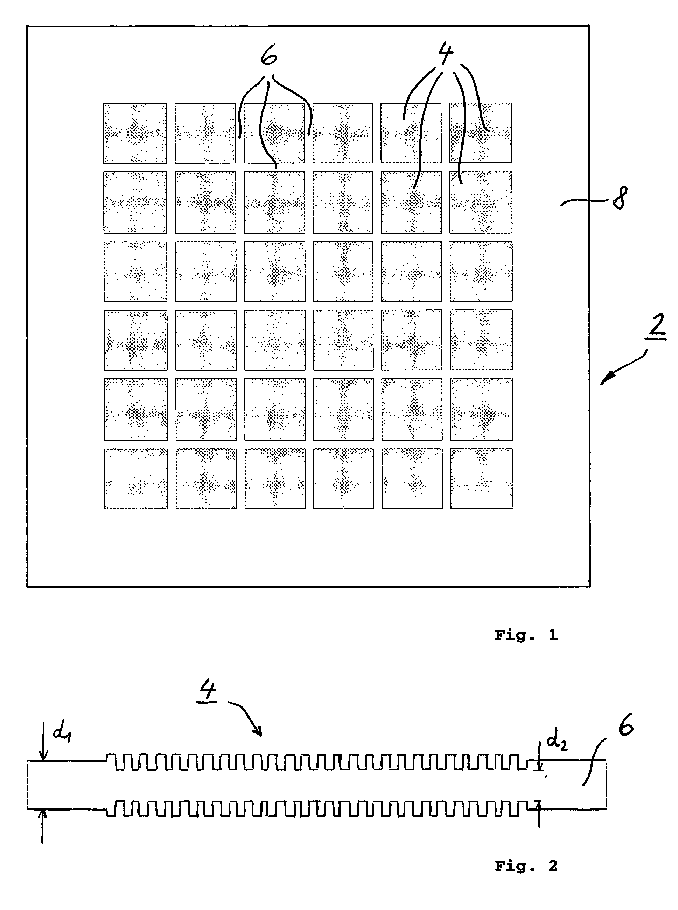

Figure 1 depicts a schematic view of a polymer film, hereinafter referred to as PEM 2. The PEM layer 2 comprises various treated sections, hereinafter referred to as active sections 4, which are separated from each other by separation bands 6. The active sections 4 have been generated by irradiation of these sections with an electron beam having a predetermined irradiation profile in order to both define irradiated sections and to form reactive centers, i.e. radicals, in said irradiated sections of the PEM layer 2 and by subsequently exposing the irradiated sections of the PEM layer 2 to a monomer or a mixture of monomers amenable to radical polymerization in order to achieve the formation of a graft copolymer in said irradiated sections, followed by further chemical steps, such as sulfonation, in order to arrive at the final product of an active section 4 with respect to fuel cell functionality. The active sections 4 are separated from each other by the separation bands 6. Anyway, also the separation bands 6 can be subjected to a separate irradiation and chemical modification step in order to introduce specific properties even in these initially un-irradiated and un-grafted separation bands 6 in the PEM layer 2. Suitable materials for the PEM layer 2, suitable irradiation steps and profiles and suitable grafting conditions and materials are proposed in the international patent application PCT/EP2004/010252.

The use of the predetermined irradiation profile applied to the PEM layer 2 (in Figure 1 shown on a "macro-scale"-basis) allows therefore to generate this active sections 4 which have full fuel cell ion exchange functionality. The sections 4 are all placed within the same plane of the PEM layer 2. The separation bands 6 in between the active sections 4 serve the purpose of stabilizing the regions comprising the active sections 4 since these separation bands 6 are sections having no ion exchange functionality and therefore they are not subject to bulging and buckling. The periphery 8 of the PEM layer 2 has the same properties as the separation bands 6 and serves sealing purposes, thereby offering an inert contact to a bipolar plate since the PEM layer 2 in its untreated status is an insulator and fluid tight separator.

Figure 2 is a schematic cross sectional view through an active section 4 of the PEM layer 2. The active section 4 has been treated prior to the irradiation and chemical modification steps by an imprinting step to reduce its thickness to a smaller thickness d₂ as compared to the normal thickness d₁ of the separation bands 6. On the micro-scale basis this figure shows the mechanical structuring of the film prior to modification through irradiation and grafting by introducing a ridged structure within an active section 4. The ridged structure is advantageous in the sense of offering spare volume to balance any swelling which otherwise would lead to bulging/buckling of the active sections 4 upon chemical modification.

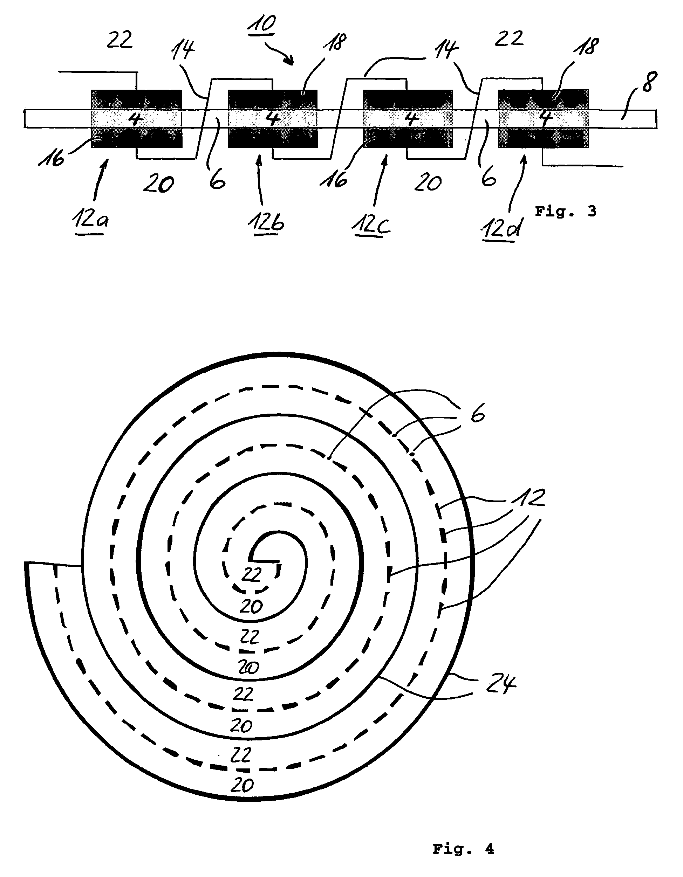

Figure 3 now schematically illustrates a fuel cell module 10 having a number of fuel cell sections 12a, 12b, 12c and 12d which are connected electrically in series by electric conductors 14. Each cell section 12a to 12d comprises an active section 4 of the PEM layer 2, a cathode 16 and an anode 18. On the side of the PEM layer 2 oriented towards the cathodes 16 an oxygen containing gas can be supplied in a cathode chamber 20, which is commonly used for all cathodes 16. Accordingly, on other side of the PEM layer 2 oriented towards the anodes 18 a hydrogen or methanol containing fluid can be supplied in an anode chamber 22 which is commonly used for all anodes 18. These cathode chambers 20 and anode chambers 22 simplify the design of the full cell module 10 tremendously since between the single fuel cell sections 12a to 12d additional insulation material is obsolete. The electric conductors 14 have to penetrate through the PEM layer 2 in the sections of the separation bands 6. Since the untreated separation bands 6 do not have ion exchange properties and can therefore be considered insulating, the electric conductors 14 do not have to be insulated specifically.

Figure 4 finally illustrates one design option for a fuel cell module which can be derived from the new fuel cell arrangement which might be called a "Multi-cell-in-one-layer-concept". The full cell module shown in Figure 4 comprises a wound PEM layer comprising a plurality of fuel cells 12. In the PEM layer 2 the active regions and thereby the fuel cells 12 are separated from each other by separation bands 6 which are in Figure 4 shown as the gaps in the dashed line which stands for the PEM layer. Of course, the separation bands can be used in this embodiment as joints for the wound structure when the fuel cells 12 are substantially planar. Anyway, it is possible to generate a fuel cell 12 in a flexible manner in order to account for the curvature of the wound structure.

The windings are separated from each other by an intermediate layer 24 which essentially serves the purpose of separating the cathode chamber 20 from the anode chamber 22 in the next winding. It can be easily seen from this example that the "Multi-cell-in-one-layer-concept" offers a variety of new fuel cell design concepts which have not been accessible with the prior art stack technology of substantially parallel and planar fuel cells.

## Claims

1. A membrane electrode assembly (10), comprising a polymer electrolyte (2) which is sandwiched between a cathode layer (16) and an anode layer (18),
**characterized in that**
said polymer electrolyte layer (2) is a polymer film having a plurality of sections (4), said sections (4) being radiation grafted and sulfonated, whereby said sections (4) are separated from each other by separation bands (6) whereby the separation bands (6) are untreated sections of the original polymer electrolyte layer (2).

2. A method for preparing a membrane (2) to be assembled in a membrane electrode assembly (10), comprising the steps of:
a) irradiating sections (4) of the polymer film (2) with electromagnetic and/or particle radiation with a predetermined irradiation profile in order to both define irradiated sections (4) and to form reactive centers, i.e. radicals, in said irradiated sections (4) of the film; thereby separating the irradiated sections (4) from each other by separation bands (6) of un-irradiated film sections;
b) exposing the film (2) comprising the irradiated sections (4) to a monomer or a mixture of monomers amenable to radical polymerization in order to achieve the formation of a graft copolymer in said irradiated sections (4).

3. The method according to claim 2, wherein
said predetermined irradiation profile is chosen to provide a irradiation gradient increasing from the margins (6, 8) of the sections (4) to be irradiated to the inner portions of the sections (4) to be irradiated.

4. The method according to claim 2 or 3, wherein
said predetermined irradiation profile is grid-shaped.

5. The method according to claim 2 or 3, wherein
the thickness (d₂) of the membrane in the sections (4) to be irradiated is reduced as compared to the thickness (d₁) of the membrane (2) in the separation bands (6) which remain un-irradiated.

6. The method according to any of the preceding claims 2 to 5, wherein
the sections to be irradiated are subject to an imprinting step in order to generate a three-dimensional membrane structure.

7. The method according to any of the preceding claims 2 to 6, wherein
the steps of irradiating and subsequent chemical modification is carried out repeatedly using different irradiation profiles and different chemical compounds or precursors thereof, respectively.

8. The method according to any of the preceding claims 2 to 7, wherein
further steps, such as sulfonation of the grafted component, are applied to introduce the desired proton conduction functionality in said irradiated sections (4).
